# EUROPEAN PATENT SPECIFICATION

(11) **EP 2 982 589 B1**
(45) Date of publication and mention of the grant of the patent: **26.12.2018**
(21) Application number: 14779945.6
(22) Date of filing: 11.03.2014
(51) Int. Cl.: B62K 15/00, B62K 5/027, A45C 9/00, B62K 5/02, B62K 5/025, B62K 5/06, B62K 13/08

(54) **DRAW-BAR BOX TYPE PORTABLE FOLDING ELECTRO-TRICYCLE WITH FOLDING CHAIR FUNCTION**
TRAGBARES UND ZUSAMMENKLAPPBARES ELEKTRODREIRAD MIT EINEM SCHUBLADENKASTEN UND EINER SITZKLAPPFUNKTION
TRICYCLE ÉLECTRIQUE PLIANT PORTABLE DU TYPE À BOÎTE DE BARRE DE TRACTION PRÉSENTANT UNE FONCTION DE CHAISE PLIANTE

(30) Priority: 01.04.2013 CN 201320156454 U
(43) Date of publication of application: 10.02.2016
(73) Proprietor: Wang, Jianmin, Beijing 100025 (CN); Wang, Sumi, Redhill Surrey RH1 2JD (GB)
(72) Inventor: Wang, Jianmin, Beijing 100025 (CN); Wang, Sumi, Redhill Surrey RH1 2JD (GB)
(74) Representative: Baldwin, Mark
(86) International application number: PCT/CN2014/073223
(87) International publication number: WO 2014/161424

(56) References cited:
- EP-A2- 1 736 400
- CN-A- 101 780 828
- CN-A- 102 152 831
- CN-A- 102 490 840
- CN-A- 103 204 209
- CN-U- 201 756 156
- CN-Y- 201 356 169
- JP-A- 2007 261 556
- US-B1- 7 461 715

## Description

### Technical field:

The present invention relates to a portable, foldable electric tricycle structure, and more particularly, a folding electric tricycle that can be presented as a portable trolley suitcase or a folding chair.

### Background:

Nowadays electric bicycles and electric tricycles have become popular transportation tools. To improve portability and storability, many folding electric bicycles and tricycles have emerged on the market. However, almost none of these folding electric vehicles meet the volume and weight requirements to be carried onto buses or trains.
Document CN201756156U discloses a portable, foldable electric tricycle with functions to be folded as a trolley suitcase or chair, comprising: a controlling handlebar (8), a seat case (12), a foldable frame (12), an electric front wheel (15) and rear wheels. The lower part of a front wheel fork (5) mounts the electric front wheel (15), a drive motor (16) is installed at the middle of the electric front wheel (15), the front end of the foldable frame (12) is connected to a foldable handlebar base, the controlling handlebar (8) is installed onto the upper end of the foldable handlebar base. When folded into a tricycle state from a trolley suitcase configuration, the foldable frame (12) is folded to the front of the seat case (2), the controlling handlebar (8) is folded to an upright position, the front wheel fork is folded to an upright position, a backrest (4) is hinged to the upper end of the seat case (2) at a backrest folding joint (3, 5).

Therefore, there is an urgent need to develop a foldable electric vehicle that is portable and can be carried onto buses or trains.

### Problems to be solved:

The objective of the present invention is to provide a portable and foldable electric tricycle that can be presented as a chair or a trolley suitcase, so as to solve the problems of inconvenience between buses, undergrounds and travel destinations.

### Disclosure of invention:

The invention provides a portable, foldable electric tricycle as specified in claim 1.

Compared with the existing technology offerings on the market, the present invention has the following advantages:
As the present invention can be easily folded into a normal trolley suitcase shape and size, it is convenient for the users to take it onto buses and trains. Instead of driving cars into downtown, if takes the option of riding this electric tricycle, folding it to trolley suitcase when taking public transportations, then riding it again as tricycle to offices or destinations downtown, hence, traffic congestion and air pollution problems in urban areas will be reduced significantly. Furthermore, it will save huge amount of energy and money. In addition, when folded to trolley suitcase shape, its volume is largely reduced. This combined with the wheel-dragging function of the trolley suitcase enables it enters the offices, hotels and shopping malls with the users. Compared with driving own cars, this invention can be kept by the side of the users at all time, which reduces the chance of getting lost and saves parking spaces in urban areas. In addition, the invention can also be folded to a chair mode, which further increases its applications.

### Brief description of drawings:

In the drawings:
Fig. 1 is a schematic view of the vehicle in tricycle state;
Fig. 2 is a plain cross-sectional view of the connections of the foldable frame, foldable front wheel base, hook locking component, front wheel fork, front wheel torque transmission female and male component, foldable handlebar base and latch hook in tricycle state;
Fig. 3 is a schematic view of the first step of folding the vehicle to trolley suitcase shape;
Fig. 4 is a schematic view of the second step of folding the vehicle to trolley suitcase shape;
Fig. 5 is a schematic view of the third step of folding the vehicle to trolley suitcase shape;
Fig. 6 is a schematic view of the vehicle presented in folded trolley suitcase shape;
Fig. 7 is a schematic view of the shape of the vehicle folded in transportation or storage mode;
Fig. 8 is a schematic view of the vehicle presented as a folded chair.

### Drawings Code details:

(1) seat case
   (101) dashed line
(2) foldable frame
(3) foldable front wheel base
(4) hook locking component
(5) front wheel fork
(6) front wheel torque transmission female component
(7) electric front wheel
   (701) drive motor
(8) foldable footrest
(9) foldable handlebar base
(10) controlling handlebar
(11) latch hook
(12) handlebar torque transmission male component
(13) foldable beam
(14) backrest
   (141) backrest connecting rod
   (142) backrest folding joint
   (143) backrest edge joint
   144) reflective device
(15) connecting rod
   (151) rod lower end hinge joint
(16) foldable rear wheel stand
   161) rear wheel stand hinge joint
(17) rear wheel
(18) elastic pushing rod
   (181) pushing rod stopping joint
(19) motor speed adjuster
(20) seating cushion
(21) battery

### Description of carrying out invention:

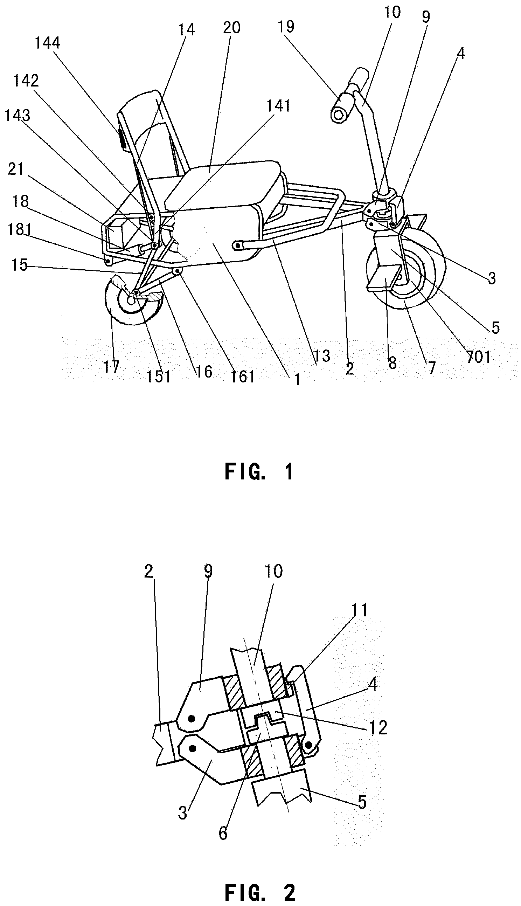

Referring to the drawings and initially to Figs.1 and 2, both rear ends of the foldable frame 2 are hinged to the front of the seat case 1, the front end of the foldable frame 2 is hinged to a foldable front wheel base 3. A hook locking component 4 is attached to the front end of the foldable front wheel base 3, a front wheel fork 5 is secured to the lower part of the folding wheel base frame 3, a front wheel torque transmission female component 6 sits on the upper part of the front wheel fork 5, the lower part of the front wheel fork 5 mounts the electric front wheel 7, a drive motor 701 is installed at the middle of the electric front wheel 7, the front end of the foldable frame 2 is connected to the foldable handlebar base 9, the controlling handlebar 10 is installed onto the upper end of foldable handlebar base 9, a motor speed adjuster 19 is installed on the controlling handlebar 10; a handlebar torque transmission male component 12 is attached to the lower end of controlling handlebar 10, and a latch hook 11 is installed to the front of the foldable handlebar base 9.

When folded into a tricycle state from trolley suitcase shape, the foldable frame 2 is folded to the front of the seat case 1, the controlling handlebar 10 is folded to an upright position, the front wheel fork 5 is folded to an upright position, the foldable handlebar base 9, the foldable front wheel base 3 are interlocked with each other, and are both interlocked with the foldable frame 2 by snapping the hook locking component 4 and the latch hook 11; the front wheel torque transmission female component 6 at the upper end of the front wheel fork 5 in interlocked with the handlebar torque transmission male component 12 at the lower end of the controlling handlebar 10. When controlling handlebar 10 is turned an angle, the torque will be transmitted to electric front wheel 7 through handlebar torque transmission male component 12 and front wheel torque transmission female component 6, thus the trike will turn accordingly. To fold the tricycle to trolley suitcase shape, fold the foldable frame 2, the connecting parts of the associated controlling handlebar 10, and the electric front wheel 7 to the inside of the seat case 1, at the same time, to fold the backrest 14 and the rear wheel 17 to the outside of the seat case 1, thus, the two rear wheels 17 become the wheels for the trolley suitcase and the seat case 1 forms the body of the trolley suitcase.

The procedure of folding the foldable frame 2, the connecting parts of the associated controlling handlebar 10, and the electric front wheel 7 to the inside of the seat case 1 is achieved by the following steps:
Please refer to Figs. 2 to 5.

Remove the hook locking component 4 from the latch hook 11, and start to fold both the controlling handlebar 10 and the front wheel fork 5 towards the foldable frame 2.

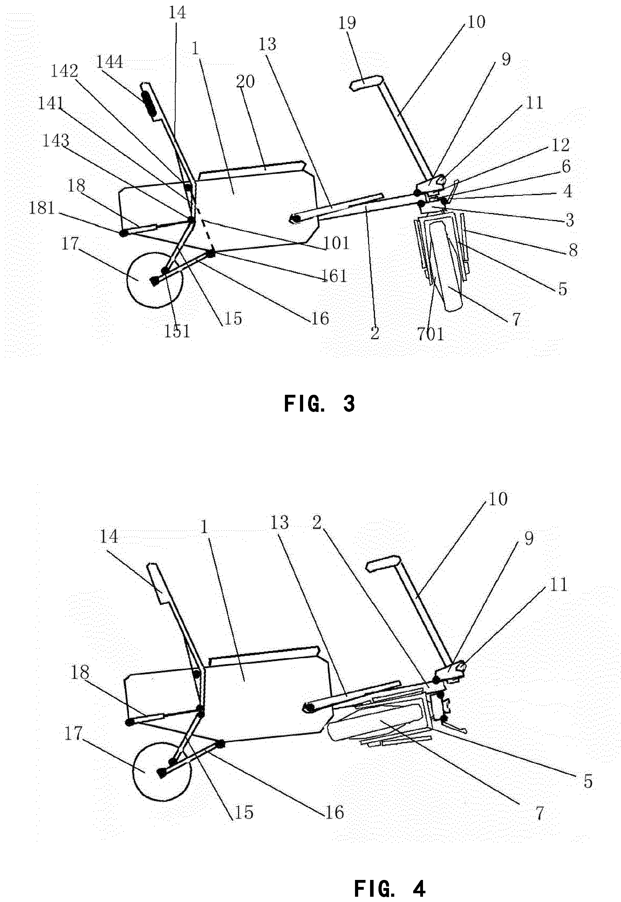

At the time, the handlebar torque transmission male component 12 front wheel torque transmission female component 6 are detached, both footrests 8 are folded towards front wheel fork 5, which can rotate approximately 90 degrees vertically (shown in Fig. 3)

Fold the front wheel fork 5 approximately 90 degrees towards and close parallel beneath the foldable frame 2 (shown in Fig. 4), and fold the controlling handlebar 10 to parallel above the foldable frame 2.

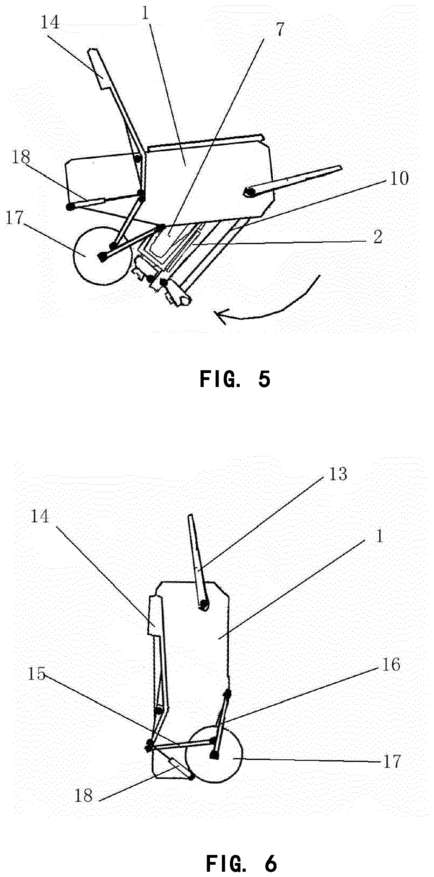

Fold the foldable frame 2 together with the front wheel fork 5 and the controlling handlebar 10 towards the underneath of the seat case 1 approximately 180 degrees, thus all these three parts are completely folded into the chest of the seating base frame 1 (shown in Figs. 4 and 5).

To eliminate the folding operations, the structures of the backrest 14 frames and the rear wheel 17 are designed as a group forming a four bar linkage.

The above interlocking system between the backrest 14 and the rear wheel 17 as well as their folding towards seat case 1 are achieved by the following steps:
Please refer to Figs. 1, 3 and 6. The backrest 14 is hinged to the seat case 1 at both left and right sides of the frame. Both sides are completely symmetrical, and so as to the connected parts. Therefore only one side is described below:
A backrest 14 is hinged to the upper end of the seat case 1 at a backrest folding joint 142, as well as hinged to a connecting rod 15 at the backrest edge joint 143. A foldable rear wheel stand 16 is hinged to the lower end of the seating base 1 at a rear wheel stand hinge joint 161, and the rear wheels 17 are attached to the foldable rear wheel stand 16. The lower end of the foldable rear wheel stand 16 is hinged to the connecting rod 15 at a rod lower end hinge joint 151. The front end of an elastic pushing rod 18 is hinged to the lower part of the backrest 14 at the backrest edge joint 143, and the elastic pushing rod 18 is hinged to the back of seat case 1 at a pushing rod stopping joint 181.

A backrest connecting rod 141 between the backrest folding joint 142 and the backrest edge joint 143, together with the connecting rod 15, the foldable rear wheel stand 16 and the seat case 1 (indicated by dashed line 101) between the rear wheel stand hinge joint 161 and the backrest folding joint 142 form a four bar linkage, wherein, the backrest folding joint 142 and the rear wheel stand hinge point 161 are the fixed link. In order to fold the vehicle to tricycle or chair state, manually fold the backrest 14 away from the seat case 1. Because of the interlocking thrust via connecting rod 15, the lower end of the foldable rear wheel stand 16 is pushed away from the docking position of the seat case 1. Therefore, pushed by the elastic pushing rod 18, both backrest 14 and the foldable rear wheel stand 16 are stably maintaining this expanded state.

In order to fold the vehicle from tricycle or chair state to the trolley suitcase shape, manually fold the backrest 14 towards the side of the seat case 1. Because of the interlocking thrust via connecting rod 15, the lower end of the foldable rear wheel stand 16 is dragged towards the seat case 1. Therefore, pushed by the elastic pushing rod 18, both backrest 14 and the foldable rear wheel stand 16 are stably maintaining this closed together state.

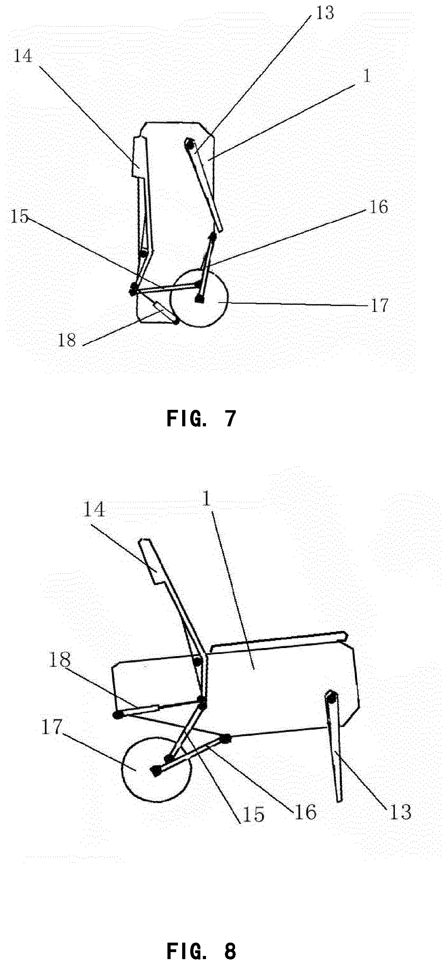

The foldable beam 13 is hinged to the front of the seat case 1. When the vehicle is folded into trolley suitcase shape, the foldable beam 13 is folded parallel to the front of the seat case 1, thus, the foldable beam 13 acts as the handlebar of the trolley suitcase; when folded into chair state, the foldable beam 13 is folded vertically to under the seat case 1, thus, the foldable beam 13 acts as the front legs of chair; when folded to transportation or storage state, the foldable beam 13 is further folded toward the seat case 1, thus the foldable beam 13 takes little space for easy transportation or storage (shown in Fig. 6 to 8).

The vehicle is powered by battery 21, which is placed inside the seat case 1; a seating cushion 20 is attached to the surface of the seat case 1, as shown in Fig. 1.

In order not to affect other passengers when travelling on public transportation, all the outer corners of the seat case 1 are chamfered, as shown in Fig. 1.

For traffic safety, reflective device 144 is installed to the back of backrest 14 of the rear side of device 14 with reflective means 144, as shown in Fig. 1.

## Claims

1. A portable, foldable electric tricycle with functions to be folded as a trolley suitcase or a chair, comprising:
a controlling handlebar (10),
a seat case (1),
a foldable frame (2),
an electric front wheel (7),
and rear wheels (17),
wherein:
both rear ends of the foldable frame (2) are hinged to the front of the seat case (1),
the front end of the foldable frame (2) is hinged to a foldable front wheel base (3),
a hook locking component (4) is attached to the front end of the foldable front wheel base (3),
a front wheel fork (5) is secured to the lower part of the foldable wheel base (3),
a front wheel torque transmission male component (6) is placed at the upper part of the front wheel fork (5),
the lower part of the front wheel fork (5) mounts the electric front wheel (7),
a drive motor (701) is installed at the middle of the electric front wheel (7),
the front end of the foldable frame (2) is connected to a foldable handlebar base (9),
the controlling handlebar (10) is installed onto the upper end of the foldable handlebar base (9),
a motor speed adjuster (19) is installed on the controlling handlebar (10),
a handlebar torque transmission female component (12) is attached to the lower end of the controlling handlebar (10),
a latch hook (11) is installed to the front of the foldable handlebar base (9),
when folded into a tricycle state from a trolley suitcase shape, the foldable frame (2) is folded to the front of the seat case (1), the controlling handlebar (10) is folded to an upright position, the front wheel fork (5) is folded to an upright position, the foldable handlebar base (9) and the foldable front wheel base (3) are interlocked with each other, and are both interlocked with the foldable frame (2) by snapping the hook locking component (4) and the latch hook (11), the front wheel torque transmission male component (6) at the upper end of the front wheel fork (5) is interlocked with the handlebar torque transmission female component (12) at the lower end of the controlling handlebar (10), a backrest (14) is hinged to the upper end of the seat case (1) at a backrest folding joint (142) and to a connecting rod (15) at the backrest edge joint (143), a foldable rear wheel stand (16) is hinged to the lower end of the seat case (1) at a rear wheel stand hinge joint (161), and the rear wheels (17) are attached to the foldable rear wheel stand (16),
the lower end of the foldable rear wheel stand (16) is hinged to the connecting rod (15) at a rod lower end hinge joint (151),
the front end of an elastic pushing rod (18) is hinged to the lower part of the backrest (14) at the backrest edge joint (143),
the elastic pushing rod (18) is hinged to the back of seat case (1) at a pushing rod stopping joint (181),
a backrest connecting rod (141) between the backrest folding joint (142) and the backrest edge joint (143), together with the connecting rod (15), the foldable rear wheel stand (16) and the seat case (101) between the rear wheel stand hinge joint (161) and the backrest folding joint (142) form a four-bar linkage,
wherein, the seat case (1) between backrest folding joint (142) and the rear wheel stand hinge point (161) is the fixed link of the four-bar linkage, and
a foldable beam (13) is hinged to the front of the seat case (1).

2. A portable, foldable electric tricycle as claimed in claim 1, wherein two opposite foldable footrests (8) are attached to respective sides of the front wheel fork (5).

3. A portable,foldable electric tricycle as claimed in claim 1, wherein a motor speed adjuster (19) is installed to the controlling handlebar (10).

4. A portable, foldable electric tricycle as claimed in claim 1, wherein a reflective device (144) is attached at the back of the backrest (14).

## Patentansprüche

1. Tragbares, klappbares elektrisches Dreirad mit Funktionen zum Zusammenklappen zu einem rollbaren Koffer oder einem Stuhl, das Folgendes umfasst:
einen Bedienungslenker (10),
einen Sitzkasten (1),
einen klappbaren Rahmen (2),
ein elektrisches Vorderrad (7),
und Hinterräder (17),
wobei:
beide hinteren Enden des klappbaren Rahmens (2) an der Vorderseite des Sitzkastens (1) angelenkt sind,
das vordere Ende des klappbaren Rahmens (2) an einer klappbaren Vorderradbasis (3) angelenkt ist,
eine Hakenarretierkomponente (4) am vorderen Ende der klappbaren Vorderradbasis (3) angebracht ist,
eine Vorderradgabel (5) am unteren Teil der klappbaren Radbasis (3) befestigt ist,
ein Vorderrad-Drehmomentübertragungs-Steckelement (6) am oberen Teil der Vorderradgabel (5) platziert ist,
der untere Teil der Vorderradgabel (5) das elektrische Vorderrad (7) festhält,
ein Antriebsmotor (701) in der Mitte des elektrischen Vorderrads (7) installiert ist,
das vordere Ende des klappbaren Rahmens (2) mit einer klappbaren Lenkerbasis (9) verbunden ist,
der Bedienungslenker (2) am oberen Ende der klappbaren Lenkerbasis (9) installiert ist,
ein Motordrehzahljustierer (19) am Bedienungslenker (10) installiert ist,
eine Lenker-Drehmomentübertragungs-Aufnahmekomponente (12) am unteren Ende des Bedienungslenkers (10) angebracht ist,
ein Einrasthaken (11) an der Vorderseite der klappbaren Lenkerbasis (9) installiert ist,
wobei der klappbare Rahmen (2), wenn er von einer rollbaren Kofferform in einen Dreiradzustand geklappt wird, auf die Vorderseite des Sitzkastens (1) geklappt wird, der Bedienungslenker (2) in eine aufrechte Position geklappt wird, die Vorderradgabel (5) in eine aufrechte Position geklappt wird, die klappbare Lenkerbasis (9) und die klappbare Vorderradbasis (3) aneinander arretiert werden und beide mit dem klappbaren Rahmen (2) durch Zusammenschnappen der Hakenarretierkomponente (4) und des Einrasthakens (11) arretiert werden, die Vorderrad-Drehmomentübertragungs-Steckkomponente (6) am oberen Ende der Vorderradgabel (5) mit der Lenker-Drehmomentübertragungs-Aufnahmekomponente (12) am unteren Ende des Bedienungslenkers (10) verriegelt wird,
eine Rückenlehne (14) am oberen Ende des Sitzkastens (1) an einem Rückenlehnenklappgelenk (142) und an einem Verbindungsstab (15) am Rückenlehneneckgelenk (143) angelenkt ist,
ein klappbarer Hinterradständer (16) am unteren Ende des Sitzkastens (1) an einem Hinterradständer-Scharniergelenk (161) angelenkt ist, und die Hinterräder (17) am klappbaren Hinterradständer (16) angebracht sind,
das untere Ende des klappbaren Hinterradständers (16) am Verbindungsstab (15) an einem Stabunterende-Scharniergelenk (151) angelenkt ist,
das vordere Ende eines elastischen Schubstabs (18) am unteren Ende der Rückenlehne (14) am Rückenlehneneckgelenk (143) angelenkt ist,
der elastische Schubstab (18) an der Rückseite des Sitzkastens (1) an einem Schubstab-Anschlaggelenk (181) angelenkt ist,
ein Rückenlehnenverbindungsstab (141) zwischen dem Rückenlehnenklappgelenk (142) und dem Rückenlehneneckgelenk (143), zusammen mit dem Verbindungsstab (15), dem klappbaren Hinterradständer (16) und dem Sitzkasten (101) zwischen dem Hinterradständer-Scharniergelenk (161) und dem Rückenlehnenklappgelenk (142) ein viergliedriges Gestänge bilden, wobei der Sitzkasten (1) zwischen dem Rückenlehnenklappgelenk (142) und dem Hinterradständer-Scharniergelenkpunkt (171) das feste Verbindungsglied des viergliedrigen Gestänges ist und ein klappbarer Träger (13) an der Vorderseite des Sitzgehäuses (1) angelenkt ist.

2. Tragbares, klappbares elektrisches Dreirad nach Anspruch 1, wobei zwei gegenüberliegende klappbare Fußstützen (8) an jeweiligen Seiten der Vorderradgabel (5) angebracht sind.

3. Tragbares, klappbares elektrisches Dreirad nach Anspruch 1, wobei ein Motordrehzahljustierer (19) am Bedienungslenker (10) installiert ist.

4. Tragbares, klappbares elektrisches Dreirad nach Anspruch 1, wobei eine reflektierende Vorrichtung (144) an der Rückseite der Rückenlehne (14) angebracht ist.

## Revendications

1. Tricycle électrique pliable, portable, doté de fonctions lui permettant d'être plié comme une mallette à roulettes ou une chaise, comprenant :
un guidon de contrôle (10),
un siège (1),
un cadre pliable (2),
une roue avant électrique (7),
et des roues arrière (17),
dans lequel :
les deux extrémités arrière du cadre pliable (2) sont articulées sur la partie avant du siège (1),
l'extrémité avant du cadre pliable (2) est articulée sur l'empattement de la roue avant pliable (3),
un élément de verrouillage à crochet (4) est fixé sur l'extrémité avant de l'empattement de la roue avant pliable (3),
une fourche de roue avant (5) est assujettie à la partie inférieure de l'empattement de la roue pliable (3),
un élément mâle de transmission du couple de la roue avant (6) est situé en partie supérieure de la fourche de la roue avant (5),
la partie inférieure de la fourche de la roue avant (5) est montée sur la roue avant électrique (7),
un moteur d'entraînement (701) est installé au milieu de la roue avant électrique (7),
l'extrémité avant du cadre pliable (2) est connecté à un support du guidon pliable (9),
le guidon de contrôle (10) est installé dans la partie supérieure du support du guidon pliable (9),
un régleur de vitesse du moteur (19) est installé sur le guidon de contrôle (10),
un élément femelle de transmission du couple du guidon (12) est fixé sur l'extrémité inférieure du guidon de contrôle (10),
un crochet de verrouillage (11) est installé sur la partie avant du support du guidon pliable (9),
quand plié dans une condition de tricycle à partir d'une configuration de mallette à roulettes,
le cadre pliable (2) est plié en partie avant du siège (1),
le guidon de contrôle (10) est plié dans une position verticale,
la fourche de la roue avant (5) est pliée dans une position verticale,
le support du guidon pliable (9) et l'empattement de la roue avant pliable (3) sont verrouillés entre eux, et sont tous deux verrouillés avec le cadre pliable (2) en enclenchant l'élément de verrouillage à crochet (4) et le crochet de verrouillage (11),
l'élément mâle de transmission du couple de la roue avant (6) à hauteur de l'extrémité supérieure de la fourche de la roue avant (5) est verrouillé avec l'élément femelle de transmission du couple du guidon (12) à hauteur de l'extrémité inférieure du guidon de contrôle (10),
un dossier (14) est articulé sur l'extrémité supérieure du siège (1) à hauteur d'une articulation de repliage (142) du dossier et sur une tige de liaison (15) à hauteur du joint périphérique du dossier (143),
un empattement de roue arrière pliable (16) est articulé sur l'extrémité inférieure du siège (1) à hauteur d'un joint articulé (161) de l'empattement de la roue arrière, et les roues arrière (17) sont fixées à l'empattement de la roue arrière pliable (16),
l'extrémité inférieure de l'empattement de la roue arrière pliable (16) est articulée sur la tige de liaison (15) à hauteur d'un joint articulé (151) de l'extrémité inférieure de la tige,
l'extrémité avant d'une tige de poussée élastique (18) est articulée sur la partie inférieure du dossier (14) à hauteur du joint périphérique du dossier (143),
la tige de poussée élastique (18) est articulée sur le dos du siège (1) à hauteur d'un joint d'arrêt de la tige de poussée (181),
une tige de liaison du dossier (141) entre l'articulation de repliage du dossier (142) et le joint périphérique (143), en association avec la tige de liaison (15), l'empattement de la roue arrière pliable (16) et le siège (101) entre le joint articulé (161) et l'articulation de repliage du dossier (142) forment un mécanisme à quatre barres,
dans lequel le siège (1), entre l'articulation de repliage du dossier (142) et le joint articulé (161) de l'emplacement de la roue arrière représente le lien fixe entre le mécanisme à quatre barres, et
une traverse pliable (13) est articulée sur la partie avant du siège (1).

2. Tricycle électrique pliable, portable, selon la revendication 1, dans lequel deux repose-pieds pliables opposés (8) sont montés sur les côtes respectifs de la fourche de la roue avant (5).

3. Tricycle électrique pliable, portable, selon la revendication 1, dans lequel un régleur de vitesse du moteur (19) est installé sur le guidon de contrôle (10).

4. Tricycle électrique pliable, portable, selon la revendication 1, dans lequel un dispositif réflecteur (144) est fixé au dos du dossier (14).
